Europäisches Patentamt

European Patent Office

Office européen des brevets

(19)

(11) Veröffentlichungsnummer: **0 242 334**
**A1**

(12) ## EUROPÄISCHE PATENTANMELDUNG

(21) Anmeldenummer: 87810230.0

(22) Anmeldetag: 10.04.87

(51) Int. Cl.⁴: **C 04 B 16/04**
C 04 B 16/12

(30) Priorität: 16.04.86 CH 1523/86

(43) Veröffentlichungstag der Anmeldung:
21.10.87 Patentblatt 87/43

(84) Benannte Vertragsstaaten:
AT BE CH DE ES FR GB IT LI NL SE

(71) Anmelder: **Winner, Eduard**
**Weierstrasse 3**
**CH-9500 Wil (CH)**

(72) Erfinder: **Winner, Eduard**
**Weierstrasse 3**
**CH-9500 Wil (CH)**

(74) Vertreter: **Gachnang, Hans Rudolf**
**Algisserstrasse 33**
**CH-8500 Frauenfeld (CH)**

(54) **Verfahren zur Herstellung von Beton und betonähnlichen Stoffen sowie Dach- und Fassadenbauteile.**

(57) Nach dem erfindungsgemässen Verfahren werden den Bestandteilen für die Betonmischung ein Anteil von 2 bis 60 % thermoplastischer Kunststoff in Form von Pulver, Granulat etc. begegeben. Der Kunststoffpartikel schmelzen beim Abbinden des Betons und verbinden sich mit den übrigen Bestandteilen. Sie bilden gleichzeitig Füllstoff und Bindemittel.
Die gemäss dem Verfahren hergestellten Fassaden- und Dachbauteile weisen hervorragende Eigenschaften bezüglich Festigkeit, Dichtheit und Bearbeitbarkeit auf.

EP 0 242 334 A1

**Beschreibung**

### Verfahren zur Herstellung von Beton und betonähnlichen Stoffen sowie Dach- und Fassadenbauteile

Gegenstand der Erfindung ist ein Verfahren zur Herstellung von Beton oder betonähnlichen Werkstoffen gemäss Oberbegriff des Patentanspruches 1 sowie die Verwendung des Verfahrens gemäss Patentanspruch 7.

Verfahren der genannten Gattung sind bekannt. Im Bauwesen werden dem Beton die verschiedenartigsten Zuschlagstoffe wie Armierungseisen, Kies, Asbestfaser etc. zur Erhöhung der Festigkeit oder auch Füllstoffe beigegeben.

Diese Zuschlagsstoffe werden durch den Zementmörtel oder den Gips eingebunden und bilden in abgebundenem Zustand einen durch den Mörtel oder Gips zusammengehaltenen Körper.

Die bekannten Zuschlagsstoffe haben den Nachteil, dass sie nur in begrenzter Menge beigefügt werden können, da stets ein genügender Anteil von Einbettungsmaterial, d.h. Mörtel etc. vorliegen muss, um einen genügenden Zusammenhalt des Gemisches zu gewährleisten.

Der Erfindung liegt daher die Aufgabe zugrunde, ein Verfahren zu schaffen, bei dem es möglich ist, den Anteil an Zuschlagsstoffen im wesentlichen beliebig hoch anzusetzen, ohne dass dadurch eine Minderung der Festigkeit eintritt.

Diese Aufgabe wird gemäss den kennzeichnenden Merkmalen des Patentanspruches 1 gelöst. Wietere vorteilhafte Ausbildungsformen sind in den abhängigen Ansprüchen beschrieben.

Durch die Beimengung von thermoplastischem Kunststoff, der sich durch die natürliche Erwärmung des Betons oder Gipses beim Ab binden sowohl mit den Mörtel-, Gips- als auch mit den übrigen Zuschlagstoffen verklebt, können bisher unbekannte Eigenschaften von mineralischen Baustoffen erzeugt werden.

Die thermoplastischen Kunststoffe können als Pulver, Granulat, in blätteriger oder fadenförmiger Ausbildung dem Beton- oder Gipsgemisch beim Mischen beigefügt werden.

Nebst reinen thermoplastischen Kunststoffen, wie sie von der Chemischen Industrie als Granulat, Pulver oder in beliebiger anderer Gestalt lieferbar sind, können auch thermoplastische Kunststoffgemische verwendet werden, welche durch einen Recycling-Prozess erzeugt worden sind. In der EP-A1-85810264 ist ein derartiger Kunststoff beschrieben. Das genannte Zitat beschränkt sich allerdings nicht auf thermoplastische Kunststoffe, sondern kann auch verschiedene Kunststoffarten enthalten. Wenn ein genügender Anteil von thermoplastischem Material vorhanden ist, kann selbstverständlich auch ein solches Gemisch verwendet werden, das uber einen Anteil an Duroplasten verfügt. Zu beachten ist dabei, dass der nicht-thermoplastische Anteil einen bestimmten Prozentsatz nicht ubersteigt, da sonst keine genügende Verklebung des Zuschlagsstoffes mit den übrigen Bestandteilen der Mischung erreicht werden kann.

Anhand eines Beispieles wird die Erfindung näher erläutert. Beim Erstellen der Mischung aus Zement, Kies und allenfalls auch Steinen oder Asbestfasern wird ein je nach Verwendungszweck grösserer oder kleinerer Anteil, z.B. 5 - 60% thermoplasisches Material zusammen mit für das Abbinden des Zementes notwendigen Menge Wasser beigegeben. Im Mischer findet eine homogene Verteilung des als Pulver, Granulat oder in anderer feiner Form beigegebenen tiefschmelzenden Kunststoffes statt.

Das auf diese herkömmliche Weise erzeugte Gemisch kann in bekannter Weise weiterverarbeitet und mit oder ohne Armierungseisen in entsprechenden Schalungen vergossen werden.

Durch die beim Abbinden in der Mischung entstehende Wärme werden die Kunststoffpartikel ganz oder nur an ihrer Oberfläche aufgeschmolzen und verbinden sich mit den benachbarten Bestandteilen der Mischung.

Wenn der Anteil an Kunststoff im Gemisch so gross angesetzt wird, dass die Abbindewärme des folglich kleinen Anteiles an Zement zu gering für eine Verschmelzung ist, was infolge Wärmeabstrahlung bei der Herstellung dünner Platten sehr wahrscheinlich ist, so kann auch Wärme zusätzlich zugeführt werden.

Nach dem vollständigen Erkalten der Mischung ergibt sich ein porenfreies sowohl durch den Zement, als auch durch den Kunststoff gebundenes Produkt, welches Eigenschaften aufweist, die durch die herkömmlichen, im wesentlichen rein mineralischen Bestandteile nicht erreicht werden können. Insbesondere ist das Produkt wasserdicht und eignet sich deshalb für Dach- und Fassedenbauelemente, die bisher vorwiegend mit Asbestwerkstoffen hergestellt worden sind.

Die Produkte sind auch feuerfest trotz des möglichen hohen Anteiles an Kunststoffen, da letztere durch die Einbettung in mineralische Stoffe nicht entflammbar sind.

Durch den Kunststoffanteil werden die auf diese Weise hergestellten Produkte, insbesondere wenn diese plattenförmig ausgebildet sind, weniger spröd und können leicht und ohne Bruchgefahr bearbeitet (z.B. gebohrt, zersägt etc.) werden. Diese Produkte sind auch leichter als rein mineralische.

Anstelle von pulverförmigem Kunststoffzuschlag kann dieser auch fadenförmig ausgebildet sein, wobei die Fäden selbst oder mit einem darin eingelegten zugfesten Material als Armierung wirken.

Der Kunststoff kann auch mit Farbpigmenten angereichert sein, so dass das Endprodukt durch den Kunststoff eine Färbung erhält. Selbstverständlich beschränkt sich das beschriebene Verfahren nicht nur auf Zementgemische. Es können andere mineralische Produkte wie Gips, Kalk etc. verwendet werden, die beim Abbinden Wärme erzeugen.

## Patentansprüche

1. Verfahren zur Herstellung von Beton und betonähnlichen Stoffen, dadurch gekennzeichnet, dass den Betonbestandteilen thermoplastischer Kunststoff begegeben wird, der durch die beim Abbinden entstehende Wärme mindestens teilweise schmilzt und sich mit den übrigen Bestandteilen des Betongemisches verbindet.

2. Verfahren nach Anspruch 1, dadurch gekennzeichnet, dass der Kunststoff beim Mischen des Betons beigegeben wird.

3. Verfahren nach Anspruch 2, dadurch gekennzeichnet, dass der thermoplastische Kunststoff als Pulver, Granulat, faden- oder plättchenförmig beigegeben wird.

4. Verfahren nach einem der Ansprüche 1 bis 3, dadurch gekennzeichnet, dass im Kunststoff Armierungsmaterialien eingebettet sind.

5. Verfahren nach einem der Ansprüche 1 bis 4, dadurch gekennzeichnet, dass dem Kunststoff Farbpigmente beigegeben werden, die dem Beton eine Färbung verleihen.

6. Verfahren nach einem der Ansprüche 1 bis 5, dadurch gekennzeichnet, dass der Anteil des thermoplastischen Kunststoffes zwischen 2 und 60 % der Trockensubstanz des Gemisches beträgt.

7. Fassaden- und Dachbauteil aus Beton, dadurch gekennzeichnet, dass als Zuschlagsstoff ein thermoplastischer Kunststoff enthalten ist.

8. Fassaden- und Dachbauteil, nach Anspruch 7, dadurch gekennzeichnet, dass 2 bis 60 % der Trockensubstanz aus thermoplastischem Kunststoff besteht, welcher mit den übrigen Bestandteilen durch Aufschmelzen verbunden ist.

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 87810230.0 |
| X | EP - A1 - 0 024 539 (CHEMIE LINZ AKTIENGESELLSCHAFT UND LENTIA GESELLSCHAFT MIT BESCHRÄNKTER HAFTUNG)<br><br>* Ansprüche; Seite 5, Zeilen 11-19 *<br><br>-- | 1-4,6-8 | C 04 B 16/04<br><br>C 04 B 16/12 |
| X | GB - A - 1 316 661 (TOMOJI MURATA)<br><br>* Ansprüche *<br><br>-- | 1-4,6-8 | |
| X | CH - A5 - 640 810 (ETERNIT-WERKE LUDWIG HATSCHEK)<br><br>* Ansprüche; Seite 4, Spalte 1, Zeilen 40-43 *<br><br>-- | 1-4,6-8 | |
| D,A | EP - A1 - 0 167 486 (WINNER EDUARD)<br><br>* Seite 7, Zeile 13 - Seite 8, Zeile 8; Beispiele *<br><br>-- | 1 | |
| A | H.BACKE "Werkstoffkunde für die Bauindustrie", 14. Auflage, 1977<br><br>VEB VERLAG FÜR BAUWESEN, Berlin<br><br>* Seite 155, Bild 8.2 *<br><br>-- | 1 | **RECHERCHIERTE SACHGEBIETE (Int. Cl.4)**<br><br>C 04 B |
| A | BETON-KALENDER 1983, Teil 1, "Taschenbuch für Beton-, Stahlbeton- und Spannbetonbau sowie die verwandten Fächer", 1983<br><br>VERLAG VON WILHELM ERNST & SOHN, Berlin - München<br><br>* Seite 7, Absatz 2 - Seite 8, Zeile 2 *<br><br>-- | 1 | |

Der vorliegende Recherchenbericht wurde für alle Patentansprüche erstellt.

| Recherchenort | Abschlußdatum der Recherche | Prüfer |
|---|---|---|
| WIEN | 01-07-1987 | BECK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 87810230.0 |
| A | Verein deutscher Zementwerke "Zement Taschenbuch 1974/75", 1975<br><br>BAUVERLAG GMBH, Wiesbaden–Berlin<br><br>   * Tafel 20 *<br><br>     -- | 1 | |
| A | K.BIEDERBICK "Kunststoffe", 2. Auflage, 1970<br><br>VOGEL-VERLAG, Würzburg<br><br>   * Tabellen I,II, Schmelzbereich *<br><br>     ---- | 1 | |

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| WIEN | 01-07-1987 | BECK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82